# EUROPEAN PATENT APPLICATION

(11) **EP 2 450 745 A1**
(43) Date of publication of application: **09.05.2012**
(21) Application number: 10794227.8
(22) Date of filing: 01.07.2010
(51) Int. Cl.: G03B 21/10, G03B 21/00, G03B 21/56, G03B 21/60, G09F 9/00, G09G 3/20, G09G 3/34, H04N 5/74, H04N 7/16, H04N 7/173

(54) **VIDEO DISPLAY DEVICE, VIDEO DISPLAY METHOD, VIDEO DISPLAY SCREEN AND LIQUID CRYSTAL DISPLAY DEVICE**

(30) Priority: 03.07.2009 JP 2009159241; 16.09.2009 JP 2009215073
(71) Applicant: Sharp Kabushiki Kaisha, Osaka-shi, Osaka 545-8522 (JP); Research Organization Of Information And Systems, Tachikawa-shi, Tokyo 190-8562 (JP)
(72) Inventor: GOHSHI, Seiichi, Osaka 545-8522 (JP); ECHIZEN, Isao, Tokyo 101-8430 (JP)
(74) Representative: Goddar, Heinz J.
(86) International application number: PCT/JP2010/061257
(87) International publication number: WO 2011/002059

(57) **Abstract**

A video display system (1) of the present invention includes (i) a projector (202) (image forming section) that generates a display image in accordance with a digital video signal and (ii) a screen (203) (video display section) on which an image generated by the projector (202) is projected and displayed. Provided behind the screen (203) is an infrared-emitting unit (204) (light-emitting section) that emits infrared light (invisible light) through a video display surface during a period of time in which a picture is being displayed on the screen (203). This allows invisible light to be emitted through a video display section such as a screen together with a displayed image, thereby degrading the image quality of a re-shot picture and rendering use of re-shot image content impossible.

## Description

### Technical Field

The present invention relates to video display technologies for preventing the act of using image recording devices such as video cameras to re-shoot image content, such as movies, displayed on screens or image display panels.

### Background Art

In recent years, an increase in the use of and improvement in the image quality of digital image display devices and imaging devices such as digital cameras have made it possible to view content of high image quality at low cost. Meanwhile, the act of using imaging devices such as digital video cameras to capture content, such as images and moving images, displayed on screens or displays and illegally distributing the re-shot content (act of re-shooting) has been seen as a problem. The distribution of pirate DVDs made by such illegal capturing goes against the protection of copyrights and causes a huge economic loss, and there is an urgent need for measures against the problem.

Proposed as measures against the problem are methods for (i) embedding, in image content to be displayed (original image content) in the form of a watermark, a facility ID (information on a facility in which the original image content is shown) and a device ID (information on a device that shows the original image content), (ii) detecting the IDs from image content (re-shot image content) made by re-shooting the original image content and distributed, and thereby identifying the facility and device in and with which the re-shooting was committed. For example, Non-patent Literatures 1 and 2 disclose methods of watermark technology.

### Citation List

Non-patent Literature1
   J. Haitsma and T. Kalker, "A Watermarking Scheme for Digital Cenema", Proceedings of IEEE International Conference on Image Processing (ICIP), pp. 487-489, 2001.
Non-patent Literature 2
   S. Gohshi, H. Nakamura, H. Ito, R. Fujii, M. Suzuki, S. Takai, and Y. Tani, "A New Watermark Surviving After Re-shoating the Images Displayed on a Screen", Lecture Note in Artificial Intelligence, Vol. 3682, pp. 1099-1107 Springer-Verlag, 2005.

### Summary of Invention

### Technical Problem

However, although the watermark techniques disclosed in these patent literatures bring about a certain effect of psychologically preventing a dishonest person from committing an act of re-shooting, the watermark techniques leave room for him/her to capture and record content and therefore cannot prevent illegal distribution of re-shot image content.

This is because information embedded in image content by such a conventional watermark technique can only be seen when dedicated reading means (watermark detector) is used. That is, although specific information such as a facility ID and a device ID is embedded in image data created by illegally re-shooting an image, the image data can be displayed by an ordinary reproducing device as an image that is not obviously different from the original image content. Therefore, while it is possible to later identify, by using the dedicated reading means, the facility in which the act of capturing was committed and the like, it is still impossible to avoid illegal distribution of the re-shot image content, because a picture based on the illegally re-shot image content is a viewable image.

The present invention provides means which emits invisible light through a video display section, such as a screen or a liquid crystal display panel, together with a displayed image and thereby degrades the image quality of a re-shot picture and renders use of re-shot image content impossible.

### Solution to Problem

In order to solve the foregoing problems, a video display apparatus according to the present invention is a video display apparatus including (i) an image forming section that generates a display image in accordance with a digital video signal and (ii) a video display section on which an image generated by the image forming section is projected and displayed, the video display apparatus including a light-emitting section that emits invisible light through a surface of the video display section during a period of time in which a picture is being displayed on the video display section.

The video display apparatus of the present invention serves to display a picture by having the image forming section, such as a projector, form an image in accordance with a digital video signal and projecting the image on the video display section, such as a screen. The video display apparatus of the present invention is provided with a light-emitting section that emits invisible light through a surface of the video display section during a period of time in which a picture is being displayed on the video display section.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing configuration, during a period of time in which a picture is being displayed on the video display section, invisible light that cannot be seen by human eyes but can be recorded as a visible image by a recording device such a video camera can be emitted from the video display surface. This causes re-shot image content to contain invisible light as an image (re-shooting prevention signal) that interferes with the original picture, thus making it possible to degrade the display quality of the re-shot image. It should be noted that since the light emitted from the light-emitting section is not visible light, it seems to humans as if only the original picture was displayed on the video display section.

Thus, the video display apparatus of the present invention can degrade the display quality of a re-shot picture without lowering the display quality of a picture that is displayed on the video display section. This makes it possible to reduce the utility value of re-shot image content and, as a result, prevent illegal distribution of the re-shot image content.

In order to solve the foregoing problems, a video display method according to the present invention is a method for displaying a picture on a video display apparatus including (i) an image forming section that generates a display image in accordance with a digital video signal and (ii) a video display section on which an image generated by the image forming section is projected and displayed, the method including emitting invisible light through a surface of the video display section during a period of time in which a picture is being displayed on the video display section.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing method, during a period of time in which a picture is being displayed on the video display section, invisible light that cannot be seen by human eyes but can be recorded as a visible image by a recording device such a video camera can be emitted from the video display surface. This causes re-shot image content to contain invisible light as an image (re-shooting prevention signal) that interferes with the original picture, thus making it possible to degrade the display quality of the re-shot image. It should be noted that since the light emitted from the light-emitting section is not visible light, it seems to humans as if only the original picture was displayed on the video display section.

Thus, the video display method of the present invention can degrade the display quality of a re-shot picture without lowering the display quality of a picture that is displayed on the video display section. This makes it possible to reduce the utility value of re-shot image content and, as a result, prevent illegal distribution of the re-shot image content.

In order to solve the foregoing problems, a video display screen according to the present invention is a video display screen on which an image formed in accordance with a digital video signal is displayed, the video display screen including: a video display sheet; and a light-emitting section that emits invisible light through a surface of the video display sheet during a period of time in which a picture is being displayed on the video display sheet.

The video display screen of the present invention is a video display screen on which an image formed in accordance with a digital video signal by using an image forming device such as a projector is displayed. The video display screen of the present invention includes a video display sheet and a light-emitting section that emits invisible light through a surface (video display surface) of the video display sheet.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing configuration, during a period of time in which a picture is being displayed on the video display sheet, invisible light that cannot be seen by human eyes but can be recorded as a visible image by a recording device such a video camera can be emitted from the video display surface. This causes re-shot image content to contain invisible light as an image (re-shooting prevention signal) that interferes with the original picture, thus making it possible to degrade the display quality of the re-shot image.

In order to solve the foregoing problems, a liquid crystal display device according to the present invention is a liquid crystal display device including (i) a liquid crystal panel on which a picture is displayed and (ii) a backlight that irradiates the liquid crystal panel with light, the backlight including: a visible light source that irradiates the liquid crystal panel with visible light; and a light-emitting section that emits invisible light, the backlight emitting the invisible light through an image display surface of the liquid crystal panel during a period of time in which a picture is being displayed on the liquid crystal panel.

The liquid crystal display device of the present invention includes a liquid crystal panel on which a picture is displayed and a backlight that irradiates the liquid crystal panel with light. The liquid crystal display device of the present invention is provided with a light-emitting section that emits invisible light through an image display surface of the liquid crystal panel during a period of time in which a picture is being displayed on the liquid crystal panel.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing configuration, during a period of time in which a picture is being displayed on the liquid crystal panel, invisible light that cannot be seen by human eyes but can be recorded as a visible image by a recording device such a video camera can be emitted from the image display surface. This causes re-shot image content to contain invisible light as an image (re-shooting prevention signal) that interferes with the original picture, thus making it possible to degrade the display quality of the re-shot image. It should be noted that since the light emitted from the light-emitting section is not visible light, it seems to humans as if only the original picture was displayed on the liquid crystal panel.

Thus, the liquid crystal display device of the present invention can degrade the display quality of a re-shot picture without lowering the display quality of a picture that is displayed on the liquid crystal panel. This makes it possible to reduce the utility value of re-shot image content and, as a result, prevent illegal distribution of the re-shot image content.

### Advantageous Effects of Invention

A video display apparatus of the present invention is characterized by being provided with a light-emitting section that emits invisible light through a surface of the video display section during a period of time in which a picture is being displayed on the video display section.

A video display method of the present invention includes emitting invisible light through a surface of the video display section during a period of time in which a picture is being displayed on the video display section.

The video display apparatus and the video display method of the present invention can degrade the display quality of re-shot image content without lowering the display quality of a picture that is displayed on the video display section.

Further, a video display screen of the present invention includes: a video display sheet; and a light-emitting section that emits invisible light through a surface of the video display sheet during a period of time in which a picture is being displayed on the video display sheet; and a light emission control section that controls a state of emission of the light-emitting section.

The video display screen of the present invention can degrade the display quality of re-shot image content without lowering the display quality of a picture that is displayed on the video display section.

Further, a liquid crystal display device of the present invention includes a backlight including: a visible light source that irradiates the liquid crystal panel with visible light; and a light-emitting section that emits invisible light, the backlight emitting the invisible light through an image display surface of the liquid crystal panel during a period of time in which a picture is being displayed on the liquid crystal panel.

The liquid crystal display device of the present invention can degrade the display quality of a re-shot picture without lowering the display quality of a picture that is displayed on the liquid crystal panel.

As described above, the present invention can reduce the utility value of re-shot image content by degrading the display quality of the re-shot image content and, as a result, prevent illegal distribution of the re-shot image content.

### Brief Description of Drawings

Fig. 1

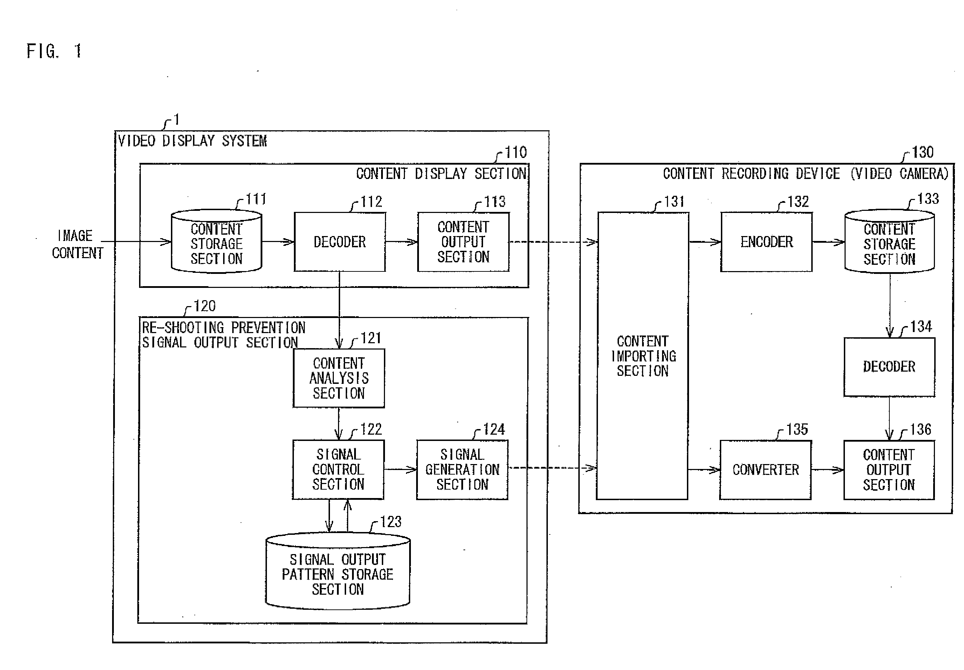

   Fig. 1 is a block diagram showing functional components of a video display system according to an embodiment of the present invention.
Fig. 2

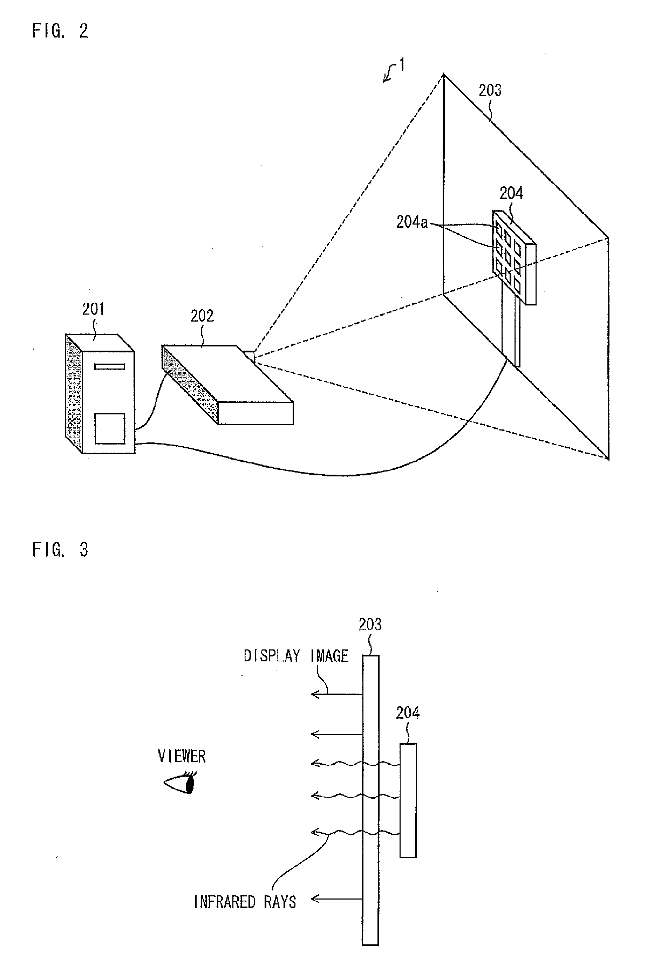

   Fig. 2 is a schematic diagram schematically showing a configuration of a video display system according an embodiment of the present invention.
Fig. 3
   Fig. 3 is a schematic diagram showing a positional relationship between a screen and an infrared-emitting unit of a video display system of the present embodiment and a viewer.
Fig. 4

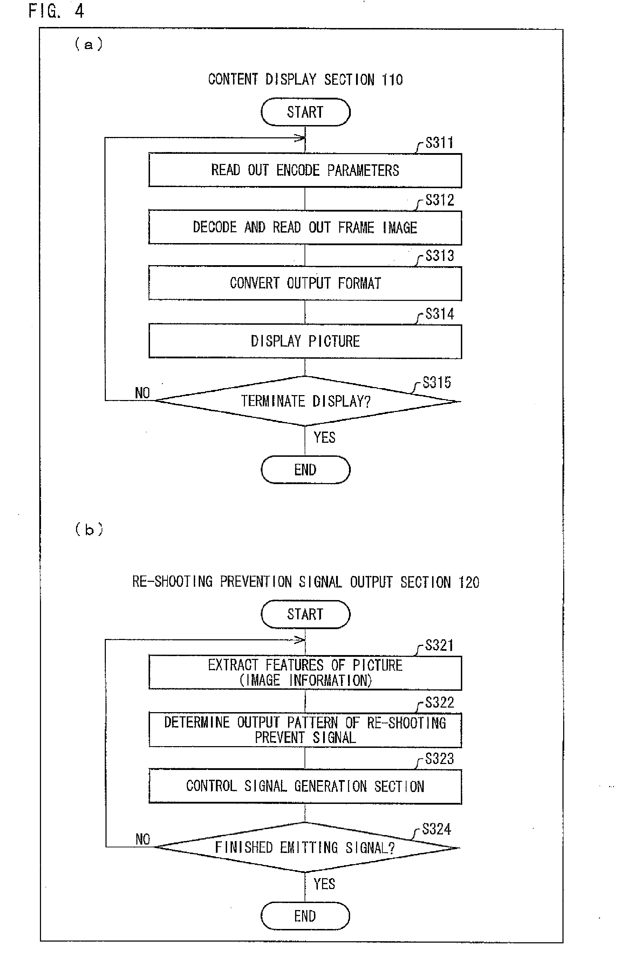

   Fig. 4 shows (a) a flow chart showing an example of flow of a process in a content display section 110 of Fig. 1 and (b) a flow chart showing an example of flow of a process in a re-shooting prevention signal output section 120 of Fig. 1.
Fig. 5

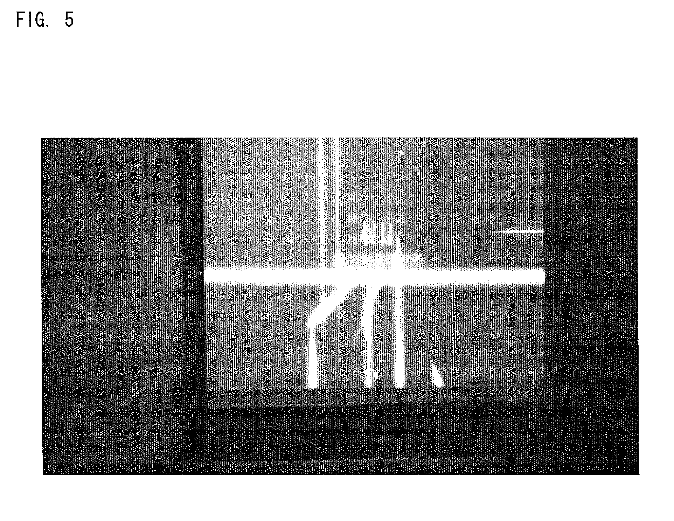

   Fig. 5 shows an example of an image that is obtained by capturing with a video camera an image displayed on the screen of a video display system of the present embodiment.
Fig. 6

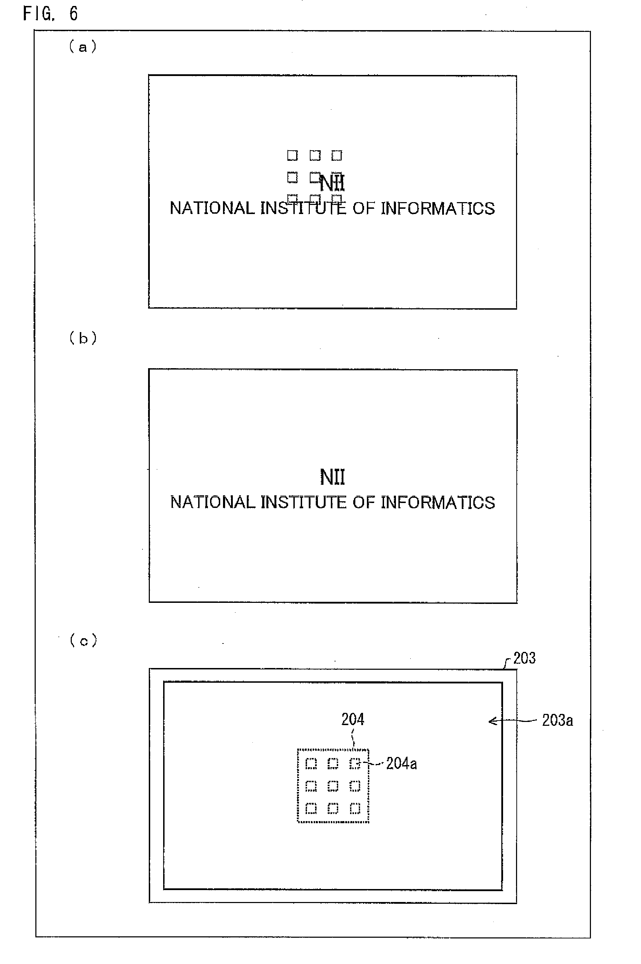

   Fig. 6 shows (a) a diagram schematically showing an image that is obtained by capturing with a video camera an image displayed on the screen of a video display system of the present embodiment, (b) a diagram schematically showing an image that is recognized by a person watching an image displayed on the screen of the video display system of the present embodiment, and (c) a plan view of the screen of the video display system of the present embodiment as seen from a viewer.
Fig. 7

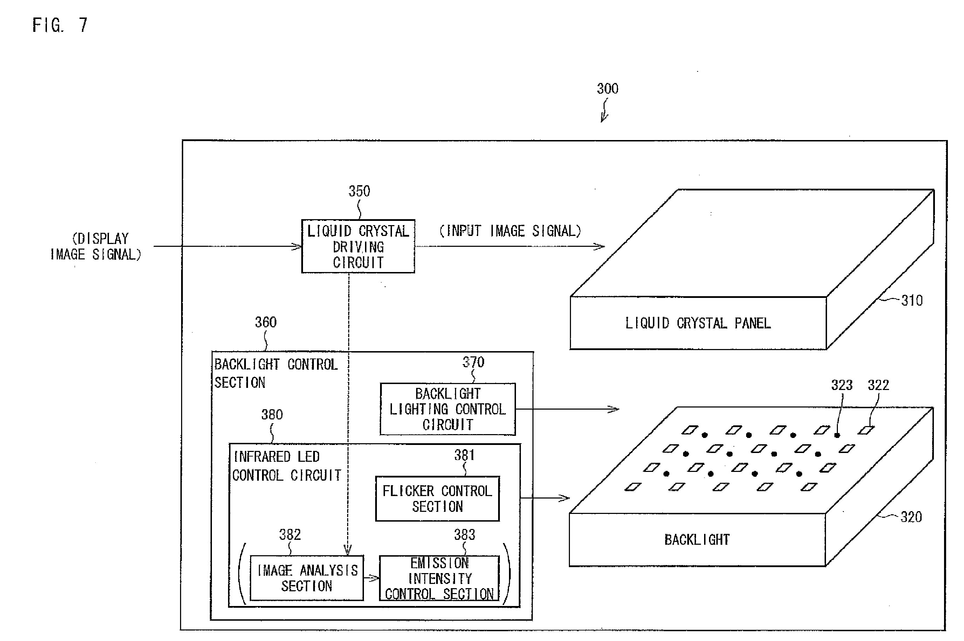

   Fig. 7 is a block diagram showing a configuration of a liquid crystal display device according to a second embodiment of the present invention.
Fig. 8

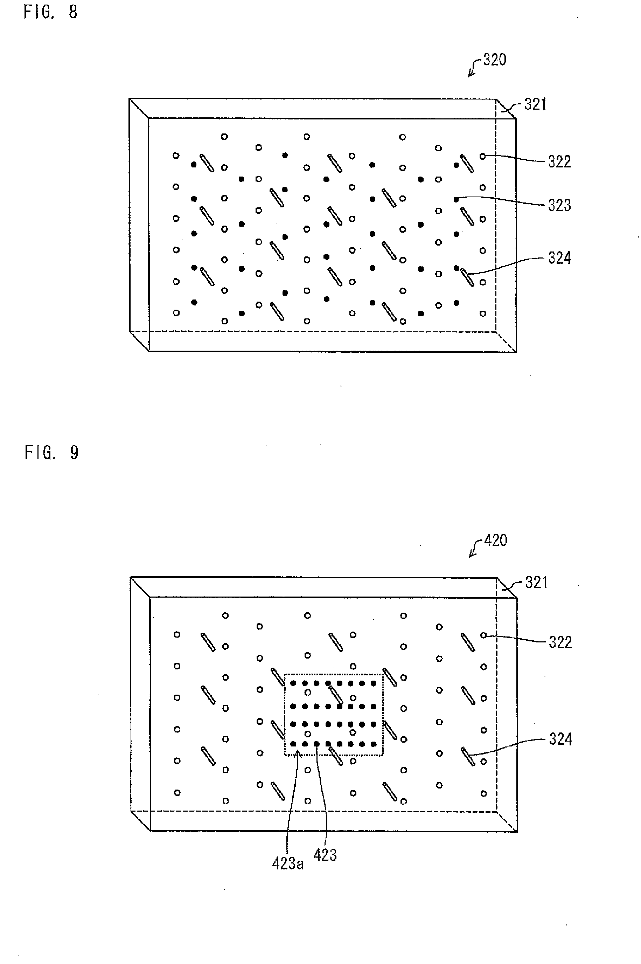

   Fig. 8 is a schematic diagram showing a configuration of a backlight to be provided in the liquid crystal display device of Fig. 7.
Fig. 9
   Fig. 9 is a schematic diagram showing a configuration of another backlight to be provided in the liquid crystal display device of Fig. 7.

### Description of Embodiments

The inventors of the present application focused their attention on the fact that while invisible light, such as infrared light and ultraviolet light, cannot be seen by humans, wavelengths other than those in a visible light range, such as infrared light and ultraviolet light, are detected as noise by CCDs and CMOS image sensors, which are imaging elements of digital cameras and digital video cameras that are used for re-shooting, due to the instability of the elements per se. Then, the inventors found that by displaying a picture on a screen in a movie theater or the like and at the same time emitting, as a re-shooting prevention signal through an image display surface, light of a wavelength that can hardly seen by humans, the re-shooting prevention signal can be loaded as a perceivable signal into image content re-shot with a video camera or the like. Thus, the inventors accomplished the present invention. That is, the present invention can degrade the quality of the re-shot image content because when the image content shot with the video camera is reproduced, an image based on the re-shooting prevention signal appears as noise that interferes with the original picture. This renders viewing of the picture difficult and, as a result, makes it possible to prevent illegal distribution of the re-shot image content.

### [Embodiment 1]

An embodiment of the present invention that is achieved on the basis of such a technical idea is described below with reference to Figs. 1 through 6. It should be noted that the specific example described here is merely an example of the present invention and the present invention is not to be limited to such an example.

In the present embodiment, a video display system is described which shows a picture such as a movie in a movie theater or a theater on the basis of digital image content. According to the video display system of the present embodiment, the display quality of digital image content, such as a movie shown in a theater, shot with a video camera or the like is degraded to such an extent that the digital image content thus shot cannot be viewed, whereby the image content after re-shooting can be prevented from being illegally distributed.

Fig. 2 schematically shows a configuration of a video display system 1 according to the present embodiment. The video display system 1 (video display apparatus) includes a video reproducing machine 201, a projector 202 (image forming section), a screen 203 (video display section, video display sheet), and an infrared-emitting unit 204 (light-emitting section, light emission control section).

The video reproducing machine 201 imports external image content and temporarily stores the image content. Then, the video reproducing machine 201 carries out a decoding process to render image formation possible and then transmits the resulting digital video signal to the projector 202. As a configuration of the video reproducing machine 201, a configuration of a publicly known digital video reproducing device can be applied. It should be noted that although, in such a video display system 1 as that of the present embodiment, it is usual for the video reply machine 201 to reproduce image content (moving-image content) composed of a plurality of image frames, this does not imply any limitation on the present invention. That is, the video reply machine 201 may reproduce still-image content.

The projector 202 receives the digital video signal from the video reproducing machine 201, forms a display image in a built-in display element, and projects the resulting image onto the screen 203 by using a built-in projection optical system. As a configuration of the projector 202, a configuration of a publicly known front-projector image display device can be applied.

The screen 203 displays the images projected thereon by the projector 202.

The infrared-emitting unit 204, disposed behind the screen 203, emits infrared light toward an area in front of the screen 203 during a period of time in which a picture is being displayed on the screen 203. The phrase "behind the screen 203" here means "on the side opposite to a surface on which an image is displayed (surface facing a viewer or audience), and the phrase "area in front of the screen 203" means "area on the side to which an image is shown (on the side where a viewer is).

Specific configurations of the screen 203 and the infrared-emitting unit 204 are described below.

The screen 203 is similar in configuration to a conventional ordinary screen on which a picture is displayed in a movie theater. It should be noted that a conventional ordinary screen has an image display surface 203a formed by putting white paint onto a surface of a black curtain having a large number of small holes (of approximately 2 mm to 3 mm).

Further, the infrared-emitting unit 204 is disposed behind the screen 203 as mentioned above. Furthermore, in the present embodiment, the infrared-emitting unit 204 is disposed in a position corresponding to a central part of the image display region 203 of the screen 203 (see (c) of Fig. 6). As shown in Fig. 2 and (c) of Fig. 6, the infrared-emitting unit 204 has a total of three-by-three, i.e., nine infrared-emitting regions 204a. Each of the infrared-emitting regions 204a is provided with an infrared LED. Examples of infrared LEDs include LEDs that emit light in a range of wavelengths around 780 nm (which are referred to as "780-nm LEDs"), LEDs that emit light in a range of wavelengths around 850 nm (which are referred to as "850-nm LEDs"), etc.

With the foregoing configuration, as shown in Fig. 3, infrared light emitted from the infrared-emitting unit 204 passes through the holes provided in the screen 203 and travels toward the viewer (audience).

It should be noted that light emitted from the infrared LEDs may contain light in a visible light range close to an infrared region. Therefore, the infrared-emitting unit 204 may have a visible-light cut filter disposed on its illuminating surface. The visible-light cut filter used here may be a conventional publicly known one. In particular, it is desirable that the 780-nm LEDs, which emit light in a range of wavelengths closer to the visible light range, be used together with a visible-light cut filter. This makes it possible to achieve an infrared-emitting unit that can be detected by a content recording device such as a video camera but cannot be seen by the eyes of any member of the audience.

The following describes the flow of a process by which the video display system 1 displays a picture and the flow of a process by which the video display system 1 degrades the quality of a re-shot image. Fig. 1 is a functional block diagram showing a configuration of the apparatus for carrying out these processes.

As shown in Fig. 1, the image display system 1 includes a content display section 110 for displaying a picture on the screen 203 and a re-shooting prevention signal output section 120 for degrading the display quality of a re-shot image. It should be noted that in Fig. 1, the content recording device 130 indicates a video camera possessed by a person committing an act of re-shooting in a movie theater or the like.

The content display section 110 includes a content storage section 11, a decoder 112, and a content output section 113.

The content storage section 111 serves to import external image content such as a movie and stores it temporarily. In this case, the content storage section 111 is achieved by a hard disk drive, a large-capacity memory, or the like. However, in the present invention, the content storage section is not limited to such a hard disk drive or large-capacity memory, and may function as a buffer during reproduction and display of image content, such as a cache or a high-speed memory. The decoder 12 carries out a decoding process by which the image content stored in the content storage section 111 is decoded into a format that complies with the display standards of the projector 202. The content output section 113 forms a display image from the image content thus decoded (digital video signals) and displays it on the image display surface (image display region) 203a of the screen 203.

In the present embodiment, among the blocks provided in the content display section 110, the content storage section 111 and the decoder 112 are located within the video reproducing machine 201. Further, the content output section 113 is achieved as the projector 202 and the screen 203.

To the content display section 110, a configuration similar to that of a publicly known video display system can be applied.

The re-shooting prevention signal output section 120 includes a content analysis section 121 (image analysis section), a signal control section 122 (light emission control section), a signal output pattern storage section 123 (light emission control section), and a signal generation section 124 (light-emitting section).

The content analysis section 121 analyzes spatial and temporal features of the image content (digital video signals) taken out from the content display section 110. That is, the content analysis section 121 analyzes the brightness (grayscale value) of each pixel in each of the plurality of image frames constituting the image content, thereby giving image information concerning the spatial and temporary features indicating what region in a series of pictures has how much brightness at what point in time (i.e., in which frame). It should be noted that a digital video signal that is transmitted to the content analysis section 121 is a video signal processed in the decoder 112.

On the basis of the image information obtained from the content analysis section 121, the signal control section 122 controls emission intensity in the infrared-emitting unit 204 at a point in time where a specific image frame is being displayed. In so doing, the signal control section 122 controls emission intensity with reference to information stored in the signal output pattern storage section 123.

It should be noted the signal output pattern storage section 123 has stored therein the intensity of infrared light (re-shooting prevention signal) to be outputted by the signal generation section 124 and an ON/OFF pattern of signal generation. Specifically, the signal output pattern storage section 123 has stored therein the average grayscale value of each pixel in an image frame and the emission intensity of the infrared-emitting unit 204 (current value of the infrared LEDs) at that time in association with each other. This allows the signal control section 122 to control a state of emission of the infrared LEDs in the signal generation section 124 with reference to the signal generation pattern stored in the signal output pattern storage section 123.

The signal generation section 124 turns ON/OFF the output of infrared light, i.e., a re-shooting prevention signal in accordance with an instruction from the signal control section 122 and changes the intensity of the infrared light.

In the present embodiment, among the blocks provided in the re-shooting prevention signal output section 120, the content analysis section 121, the signal control section 122, and the signal output pattern 123 are located within the video reproducing machine 201. Further, the signal generation section 124 corresponds to the infrared-emitting unit 204.

By thus providing the content analysis section 121, the signal control section 122, and the signal output pattern 123, the emission intensity and emission pattern of infrared rays in the infrared-emitting unit 204 can be controlled in accordance with the nature of image content.

However, in the present invention, it is not indispensable to change the emission intensity and the emission pattern (cycle of on and off) in accordance with the nature of image content, the emission of light by the infrared-emitting unit 204 may be controlled with a predetermined emission intensity in a predetermined emission pattern. This makes it possible to reduce the amount of processing in the re-shooting prevention signal output section 120. In such a case where the emission of light is controlled in a predetermined pattern, it is only necessary to provide the infrared-emitting unit 204 with the light emission control section and output infrared light with a certain emission intensity in a fixed emission pattern regardless of the content of image content during a period of time in which a picture is being displayed on the screen 203.

The content recording device 130 is a content recording device that is used by a person (re-shooter) who attempts to re-shoot a picture displayed on the screen 203. The content recording device 130 can be achieved by a conventional publicly known device such as a digital video camera.

As shown in Fig. 1, the content recording device 130 includes: a content importing section 131, which imports an image displayed in space; an encoder 132, which encodes imported content; a content storage section 133, in which encoded content is stored; a decoder 134, which decodes stored content into a format suited to be displayed; a converter 135, which coverts imported content into a format suited to be displayed; and a content output section 136, which displays or outputs imported content. The content importing section 131 includes a CCD or a CMOS image sensor as a light-receiving element. Further, the converter 135 serves to directly display or output content imported by the content importing section 131, without the content being stored.

By having such a configuration as that described above, the video display system 1 of the present embodiment can emit infrared light together with a picture toward a viewer through the image display surface of the screen 203 (see Fig. 3). Since infrared light cannot be seen by humans, an infrared-containing picture projected on the screen is seen as if a picture that does not differ at all from a normal picture was displayed. On the other hand, the content recording device 130, such as a video camera, which is used for re-shooting has as a light-receiving element a CCD or CMOS image sensor that detects infrared light. Therefore, when the infrared-containing picture is shot, the infrared light emitted through the screen is also captured as an image that can be seen by humans.

This point is described with reference to Figs. 5 and 6. Fig. 5, showing an effect of the present invention, shows an example of an image that is obtained by capturing with a video camera an image displayed on the screen 203 of the video display system 1. Fig. 5 shows an image shot when the characters "NII 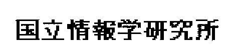 " (which means National Institute of Informatics) were projected onto the screen 203. It should be noted that the white image extending from top to bottom and across the image indicates streaks of light that appeared on the image as a result of capturing the image, and has nothing to do with an effect of the present invention.

Further, Fig. 6 also shows an effect of the present invention. (a) of Fig. 6 is a diagram schematically showing a reproduction of an image that is obtained by capturing with a video camera an image displayed on the screen 203 of the video display system 1. For comparison, (b) of Fig. 6 is a diagram schematically showing a reproduction of an image that is recognized by a person watching an image displayed on the screen 203 of the video display system 1.

Further, (c) of Fig. 6 is a plan view of the screen 203 and infrared-emitting unit 204 of Fig 2 as seen from a viewer. Although, in actuality, the infrared-emitting unit 204 disposed behind the screen 203 cannot be seen by a viewer, the infrared-emitting unit 204 is indicated by a dotted line in (c) of Fig. 6. As shown in (c) of Fig. 6, the infrared-emitting unit 204 has a total of three-by-three, i.e., nine infrared-emitting regions 204a. Therefore, visualization of infrared light emitted from the infrared-emitting regions 204a causes the three-by-three rectangles to be displayed as white images in the picture.

As shown in (b) of Fig. 6, a person looking at the screen 203 recognizes only the characters "NII 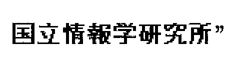 " as being projected on the surface of the screen 203. On the other hand, in an image shot with a video camera, as shown in Fig. 5 and (a) of Fig. 6, the three-by-three rectangles are displayed as white images in a central part of the screen, in addition to the character "NII 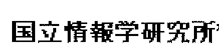 " (which means National Institute of Informatics).

According to the video display system 1 of the present embodiment, as described above, when a picture displayed on the screen 203 is shot with a video camera, infrared light emitted from the infrared-emitting unit 204 is captured as an image (noise) that interferes with the original picture. This allows the video display system 1 of the present embodiment to degrade the display quality of and reduce the utility value of a re-shot image, thus making it possible to prevent a video camera from capturing video content for the purpose of illegal distribution. In this way, infrared light emitted by the infrared-emitting unit 204 functions as a re-shooting prevention signal.

It should be noted that since the infrared-emitting regions 204a of the infrared-emitting unit 204 have rectangular shapes, circular shapes, or other specific shapes, the re-shot picture contains these specific shapes captured as white images, which make it possible to enhance the effect of interfering with the original picture. Further, by blinking the infrared-emitting regions 204a, light emitted from the infrared-emitting regions 204a can be made more conspicuous in the re-shot image. For example, if the infrared-emitting regions 204a blink at a frequency of 4 Hz to 6 Hz, the resulting blinking image will make the viewer feel bad, thus enhancing the effect of interfering with the original picture.

In the following, the flow of image processing and re-shooting prevention signal output processing in the video display system 1 are described with reference to the flow charts of (a) and (b) of Fig. 4.

First, the flow of a process in the content display section 110 is described with reference to (a) of Fig. 4.

In Step S311, the content display section 110 reads out, from image content encoded and stored in the content storage section 111, parameters in accordance with which the image content was encoded. The image content from which the parameters have been read is sent to the decoder 112. The decoder 112 reads out partial content of a given length of time from the content stored in accordance with the parameters thus read out, decodes the content, and reads out a frame image from the content thus decoded (Step S312).

The frame image read out from the decoded content is transmitted to the content output section 113 (projector 202), which converts the frame image into a display format in which the projector can form an image (Step S313).

Then, in Step S314, the content output section 113 (projector 202) displays the converted image content on the screen 203. After that, in Step S315, the content display section 110 determines whether or not there is a display termination command in a predetermined region of the image content. If there is no such command (NO in S315), the content display section 110 returns to Step S311 and continues to output the picture. On the other hand, if a display termination command is detected (YES in S315), the content display section 110 terminates the video display.

This is the flow of a process in the content display section 110. This process is identical to a method of image processing in a conventional digital video display apparatus.

In the following, the flow of a process in the re-shooting prevention signal output section 120 is described with reference to (b) of Fig. 4. (b) of Fig. 4 is a flow chart showing the flow of a signal output process that is carried out by the re-shaoting prevention signal output section 120 when the content display section 110 displays image content of one frame.

First, the content analysis section 121 of the re-shooting prevention signal output section 120 obtains features of data (image information) in the decoded image content (transmitted from the decoder 112) (Step S321). That is, the content analysis section 121 analyzes the brightness (grayscale value) of each pixel in each of the plurality of image frames constituting the image content.

The image information obtained by the content analysis section 121 is sent to the signal control section 122. The signal control section 122 refers to the signal output pattern storage section 123 to determine the intensity and emission pattern of a re-shooting prevention signal (ON/OFF state of the signal) to be transmitted in response to the image information received (Step S322). Then, the signal control section 122 controls a state of emission of infrared light in the signal generation section 124 in accordance with the pattern of signal output thus determined (Step S323). That is, in accordance with the image information obtained by the content analysis section 121, the signal control section 122 controls the intensity of emission in the signal generation section 124 (infrared-emitting unit 204) at a point in time where a particular image frame is being displayed, and controls the ON/ OFF state of emission in the infrared LEDs at the point in time.

After that, in Step S324, the content analysis section 121 determines whether or not there is a display termination command in a predetermined region of the image content. If there is no such command (NO in S324), the content display section 110 returns to Step S321 and continues the process. On the other hand, if a display termination command is detected (YES in S324), the content display section 110 terminates the process.

The following describes a method for controlling the intensity and emission pattern of a re-shooting prevention signal that is emitted by the signal generation section 124.

As for the intensity of a re-shooting prevention signal, it is possible, for example, to employ a method for determining the intensity of a re-shooting prevention signal (infrared light) on the basis of the brightness of the picture being projected on the screen 203. That is, it is possible to render the infrared-emitting unit 204 higher in emission intensity when the picture to be displayed on the screen 203 is bright than when the picture to be displayed is dark.

More specifically, the signal output pattern storage section 123 has the following information stored therein, for example. It should be noted that the current value of the infrared LEDs is an example of emission intensity suited to a case where 8-bit (0 to 255 grayscale) video data is projected on a 100-inch screen 203 by a 2500 lumen projector 202. (Information Stored in the Signal Output Pattern Section 123)

### (Case 1)

In a case where the average grayscale value of pixels contained in a region where the infrared-emitting unit 204 is disposed (i.e., a region that is irradiated with infrared light by the infrared-emitting unit 204) is 200 or higher, the current value of the infrared LEDs is set to 1 A.

### (Case 2)

In a case where the average grayscale value of pixels contained in a region where the infrared-emitting unit 204 is disposed is 50 or lower, the current value of the infrared LEDs is set to 0.3 A.

### (Case 3)

In a case where the average grayscale value of pixels contained in a region where the infrared-emitting unit 204 is disposed is neither 200 or higher nor 50 or lower (i.e., in a case where the average grayscale value is 51 or higher and 199 or lower), the current value of the infrared LEDs is set to 0.6 A.

Then, on the basis of the average grayscale value of pixels contained in a region corresponding to each frame (i.e., a region that is irradiated with infrared light by the infrared-emitting unit 204) as analyzed by the content analysis section 121, the signal control section 122 chooses the corresponding case and determines the emission intensity (or specifically, the current value of the infrared LEDs). It should be noted that the signal output pattern storage section 123 may have the above information stored therein in the form of a look-up table in which average grayscale values to be inputted and LED current values to be outputted are stored in association with each other.

By thus changing the emission intensity of infrared light, the emission intensity of infrared light can be made lower in the case of a comparatively dark picture where infrared light (re-shooting prevention signal) is conspicuous in the re-shot image and can be made higher in the case of a comparatively bright picture where infrared light (re-shooting prevention signal) is inconspicuous.

Further, as for the emission pattern of a re-shooting prevention signal (ON/OFF state of the signal), the signal control section 122 needs only control the infrared LEDs to blink during a period of time in which a series of pictures is being displayed on the screen 203. The cycle of on and off can be set, for example, to a frequency of 4 Hz to 16Hz (i.e., can be set to blink 4 to 16 times per second). This causes a re-shooting prevention signal to be displayed as a flicker in the re-shot image, thus bringing discomfort to human eyes. Further, blinking can increase durability of the infrared LEDs. It should be noted that it is preferable that the blinking frequency be 7 Hz to 8 Hz, which makes it possible to add, into the re-shot image, a re-shooting prevention signal that brings more discomfort to human eyes.

In the present embodiment, the infrared-emitting unit 204 is configured to irradiate with infrared light a region in a central part of the image display surface of the screen 203. However, the present invention is not limited to such a configuration. That is, the infrared-emitting unit 204 may be configured to irradiate all of the image display surface 203a of the screen 203 with infrared light.

Further, the infrared-emitting unit 204 may be divided into a plurality of units that irradiate a plurality of different regions partially with infrared light. In a case where the infrared-emitting unit 204 is constituted by a plurality of units, the signal control section 122 (light emission control section), which controls the emission intensity and emission pattern of infrared light, may control the units differently. For example, the emission intensity of each of the light-emitting units may be determined on the basis of the average grayscale value of display regions to be irradiated with infrared light by the respective units. In so doing, it is preferable that the emission intensity of a light-emitting unit corresponding to a region whose average grayscale value is higher (brighter) be made higher than the emission intensity of a light-emitting unit corresponding to a region whose average grayscale value is lower (darker). This makes it possible to render more conspicuous an interfering display of infrared light in an image re-shot with a video camera or the like.

It should be noted that although the video display system 1 of the present embodiment uses, as a light-emitting section that emits invisible light, a light-emitting unit having infrared LEDs as light sources, the present invention is not limited to this configuration. It is possible to use infrared light sources other than LEDs as light source for emitting infrared light. Further, the invisible light is not limited to infrared rays at a wavelength of 780 nm or higher, and may be ultraviolet rays at a wavelength of 380 nm or lower. However, since ultraviolet rays are harmful to humans, it is preferable that a light-emitting section that emits infrared light be used in the case of use of a video display apparatus of the present invention in a public facility such as a movie theater.

### (Another Embodiment of a Screen and a Light-emitting Unit)

Although, in the embodiment described above, the screen 203 and the infrared-emitting unit 204 are separate components, the present invention may also be configured such that the screen 203 is integrated with a light-emitting section that emits invisible light (infrared light or ultraviolet light).

Specifically, the screen is provided with a hole in addition to the ordinary holes (holes formed in a conventional screen), and a light-emitting section (e.g., infrared LED) is attached to the back surface (rear surface) of the screen. That is, the light-emitting section is attached to the back surface of the screen so that the light-emitting section (e.g., infrared LED) has its emission surface positioned in an area corresponding to the additional hole. Then, the emission surface of the light-emitting section is coated with the same paint as the surface of the screen is coated, in order that the light-emitting section (e.g., infrared LED) is not conspicuous (i.e., so that it is not seen by an audience).

Such a configuration allows an integration of a screen and a light-emitting section. It should be noted that since the paint put on the screen transmits invisible light, such as infrared light, it is possible to emit invisible light toward the audience even if the light-emitting section has its surface coated with the paint.

### (Example Configuration of Separation of a Video Reproducing Machine and an Infrared-emitting Unit)

Alternatively, the present invention may be composed of a screen (video display sheet) on which a picture is displayed and a light-emitting section that emits invisible light through a video display surface of the screen. That is, the video display system 1 may be configured such that the infrared-emitting unit 204 is separate from the video reproducing machine 201 and emits infrared light toward the audience through the video display surface of the screen regardless of the picture being displayed.

In this case, the infrared-emitting unit 204 is provided with a light emission control section for controlling a state of emission such as an ON/OFF state of the infrared LEDs, so that the infrared-emitting unit 204 can start to emit light in synchronism with the start of projection of a picture on the screen 203. Further, in this case, as in the embodiment described above, it is preferable that the infrared LEDs blink at a frequency of 4 Hz to 16 Hz.

The foregoing configuration, too, makes it possible to add a re-shooting prevention signal into a re-shot image so as to degrade the display quality of the re-shot image, thus bringing about an effect of preventing re-shooting of video content. In this case, as in the above case, the screen 203 and the infrared-emitting unit 204 may be separate components, or the screen 203 may be integrated with a light-emitting section such as an infrared LED.

### [Embodiment 2]

A second embodiment of the present invention that is achieved on the basis of such a technical idea is described below with reference to Figs. 7 through 9. It should be noted that the specific example described here is merely an example of the present invention and the present invention is not to be limited to such an example.

Embodiment 2 describes a configuration made by applying the technical idea of the present invention to a liquid crystal display device. According to the liquid crystal display device of the present embodiment, the display quality of digital image content, such a movie displayed on the display device, shot with a video camera or the like is degraded to such an extent that the digital image content cannot be viewed, whereby the image content after re-shooting can be prevented from being illegally distributed.

Fig. 7 shows a configuration of a liquid crystal display device 300 according to the present embodiment. As shown in Fig. 7, the liquid crystal display device 700 includes a liquid crystal panel 310 and a backlight (visible light source, light-emitting section) 320. The liquid crystal panel 310 includes pixels, receives an input image signal from a liquid crystal driving circuit 350 provided in the liquid crystal display device 300, causes each of its pixels to vary in transmittance in accordance with the input image signal, and thereby displays a picture. The liquid crystal driving circuit 350 receives a display image signal and performs various types of signal processing on the display image signal so as to cause the liquid crystal panel 310 to display a picture such as a movie in accordance with the display image signal. It should be noted here that the display image signal is a signal (image source signal) in accordance with which the liquid crystal display device displays a picture and specific examples thereof include a television signal, a video signal, etc.

It should be noted that in the present invention, the liquid crystal panel 310 is not particularly in configuration, and may be one that is commonly used as a liquid crystal panel of a liquid crystal display device.

The backlight 320 serves to irradiate the liquid crystal panel 31 with light. The backlight 320 has RGB-LEDs 322 (visible light sources) as light sources for emitting visible light. The term "RGB-LED" here means a light-emitting element composed of light-emitting diodes that emit their respective primary colors of light (red, green, and blue), i.e., composed of a red LED (R-LED), a green LED (G-LED), and a blue LED (B-LED). Use of a combination of these RGB LEDs as visible light sources makes it possible to irradiate the liquid crystal panel 310 with white light (or with colored light).

It should be noted that in the present invention, it is possible to use white LEDs instead of RGB-LEDs. These light-emitting diodes of different colors may be ones that are commonly used as light sources of a liquid crystal display device.

Further, the backlight 320 may have an optical sheet such as a diffuser or a prism sheet provided between the surface on which the LEDs are disposed and the liquid crystal panel 310.

As shown in Fig. 7, the plurality of RGB-LEDs 322 are provided on a surface behind the liquid crystal panel 310 and parallel to the image display surface of the liquid crystal panel 310. That is, the backlight 320 of the present embodiment is a direct backlight. It should be noted here that the plurality of RGB-LEDs 322 are placed at regular intervals.

Turning on and off of the plurality of RGB-LEDs 322 is controlled by a lighting control circuit 370 inside of a backlight control section 360 provided in the liquid crystal display device 300. In the present embodiment, the lighting control circuit 370 employed is one that uniformly controls the lighting and emission intensity of each RGB-LED 322. However, the present invention is not necessarily limited to such a configuration. That is, it is possible to employ a so-called area active backlight having its emission surface composed of a plurality of emission regions divided from each other and including a backlight control section that controls the emission intensity of LEDs in accordance with the luminance of a display image in each of the emission regions.

Furthermore, in addition to the visible light sources described above, the backlight 320 of the present embodiment is provided with a plurality of infrared LEDs 323 (invisible light sources) that emit infrared light (invisible light). Turning on and off of the plurality of infrared LEDs 323 is controlled by an infrared LED control circuit 380 inside of the backlight control section 360. Moreover, the infrared LED control circuit 380 controls the turning on of the infrared LEDs 323 so that the infrared LEDs 323 emit infrared light through the image display surface of the liquid crystal panel 310 during a period of time in which a picture is being displayed on the liquid crystal panel 310.

As described above, the backlight 320 of the present embodiment is provided with the plurality of infrared LEDs 323, which achieves a light-emitting section that emits invisible light. Therefore, according to the liquid crystal display device 300 of the present embodiment, when a picture displayed on the liquid crystal panel 310 is shot with a video camera, infrared light emitted from the light-emitting section is captured as an image (noise) that interferes with the original picture. This allows the liquid crystal display device 300 of the present embodiment to degrade the display quality of and reduce the utility value of a re-shot image, thus making it possible to prevent a video camera from capturing video content for the purpose of illegal distribution. In this way, infrared light emitted by the infrared LEDs 320 in the backlight 320 functions as a re-shooting prevention signal.

Further, by blinking the infrared LEDs 323, light emitted through the image display surface of the liquid crystal panel 310 can be made more conspicuous in the re-shot image. In the present embodiment, as in Embodiment 1, if the infrared LEDs 323 blink at a frequency of 4 Hz to 6 Hz, the resulting blinking image will make the viewer feel bad, thus enhancing the effect of interfering with the original picture. For that purpose, the infrared LED control circuit 380 may be provided with a flicker control circuit 381 for controlling the blinking of the infrared LEDs 323. This makes it possible to appropriately change the cycle of blinking of the infrared LEDs 323.

Fig. 8 shows an example of arrangement of RGB-LEDs 322 and infrared LEDs 323 in the backlight 320.

As shown in Fig. 8, the backlight 320 has a housing 321 and a plurality of RGB-LEDs 322 and a plurality of infrared LEDs 323 placed at substantially regular intervals on a bottom surface of the housing 321. It should be noted that in addition to the LEDs, the housing 321 has its bottom surface provided with a plurality of spacers 324 for holding constant the distance between the surface on which the LEDs are disposed and the liquid crystal panel 310.

In the present embodiment, as shown in Fig. 8, the infrared LEDs 323 are disposed on the illuminating surface of the backlight 320 in such a way as to be scattered all over the illuminating surface. This allows infrared light to be emitted as a re-shooting prevention signal from all over the illuminating surface.

However, the arrangement and number of infrared LEDs are not necessarily limited to the configuration described above. That is, it is only necessary to provide at least one infrared LED, and it is preferable to provide at most substantially the same number of infrared LEDs as the number of visible light sources (RGB-LEDs or white LEDs). It should be noted that in a case where the number of infrared LEDs is small, it is preferable to make emission intensity higher than usual. The emission intensity of the infrared LEDs can be controlled in the same way as in Embodiment 1.

For the reason of mounting, it is preferable that the RGB-LEDs 322 and the infrared LEDs 323 be equal in size to each other. In particular, in the case of a thin liquid crystal display device, it is preferable that the size of each infrared LED through its thickness be equal to or smaller than that of each RGB-LED 322, in order that the thickness of the device can be minimized.

Fig. 9 shows another example of arrangement of RGB-LEDs 322 and infrared LEDs 423 in the backlight. For convenience of explanation, those members of the backlight 420 which have the same functions as those of the backlight 320 of Fig. 8 are given the same reference numerals. In the example shown in Fig. 9, a plurality of infrared LEDs 423 are arranged intensively in the central part of the light-emitting surface of the backlight 420.

Moreover, the region in which the plurality of infrared LEDs 423 are densely arranged forms an infrared-emitting region 423a. Since this causes infrared light to be emitted from the central part of the image display surface of the liquid crystal panel 310, light from the infrared LEDs 423 is incorporated as a video interfering signal into the central part of an image shot with a video camera or the like. Therefore, the display quality of the shot image can be more greatly degraded.

Thus, in the backlight of the present embodiment, an infrared-emitting region 423a (light-emitting section) may be formed in which infrared LEDs are partially densely arranged. Since the infrared-emitting region 423a has a rectangular shape, a circular shape, or another specific shape, the re-shot picture contains the specific shape captured as a white image, which makes it possible to enhance the effect of interfering with the original picture.

Furthermore, the liquid crystal display device 300 of the present embodiment may further include: an image analysis section 382, that analyzes the brightness of a picture to be displayed on the liquid crystal panel 310; and an emission intensity control section 383 (light emission control section), which controls the emission intensity of the infrared LEDs 323. In this case, on the basis of the brightness of the picture as analyzed by the image analysis section 382, the emission intensity control section 383 renders the infrared LEDs 323 higher in emission intensity when the picture to be displayed is bright than when the picture to be displayed is dark.

In so doing, the image analysis section 382 analyzes spatial and temporal features of image content (digital video signal) on the basis of an image signal transmitted from the liquid crystal driving circuit 350. A specific process in the image analysis section 382 can be embodied by the process in the content analysis section 121 described in Embodiment 1 and, as such, is not described here.

Further, on the basis of the image information obtained from the image analysis section 382, the emission intensity control section 383 controls the emission intensity in the infrared LEDs 323 at a point in time where a particular image frame is being displayed. A specific process in the emission intensity control section 383 can be embodied by the process in the signal control section 122 described in Embodiment 1 and, as such, is not described here.

By thus providing the image analysis section 382 and the emission intensity control section 383, the emission intensity and emission pattern of infrared rays in the infrared LEDs 323 can be controlled in accordance with the nature of the image content.

Although Embodiment 2 has been described by taking as an example a liquid crystal display device including a direct backlight, the present invention is not limited to such an example. Another example configuration is a side-edge backlight having a light guide provided at the back of a liquid crystal panel with light sources provided on a side edge of the light guide.

In the case of application of the present invention to a side-edge backlight, there may be provided a mixture of visible light sources and infrared LEDs (invisible light sources) on the side edge of the light guide. Alternatively, there may be such a configuration that only visible light sources are disposed on the side edge of the light guide, and that infrared LEDs (invisible light sources) are disposed at the back of the liquid crystal panel to directly illuminate the liquid crystal panel.

In the case of disposition of infrared LEDs on a side edge of a light guide in a side-edge backlight, causing the infrared LEDs to simply emit light cannot be very effective in interfering with a re-shot image. Therefore, in order to enhance the effect of interfering with a re-shot image, it is preferable to cause the infrared LEDs to flicker.

The present invention is not limited to the description of the embodiments above, but may be altered by a skilled person within the scope of the claims. An embodiment based on a proper combination of technical means disclosed in different embodiments is encompassed in the technical scope of the present invention.

In order to solve the foregoing problems, a video display apparatus according to the present invention is a video display apparatus including (i) an image forming section that generates a display image in accordance with a digital video signal and (ii) a video display section on which an image generated by the image forming section is projected and displayed, the video display apparatus including a light-emitting section that emits invisible light through a surface of the video display section during a period of time in which a picture is being displayed on the video display section.

The video display apparatus of the present invention serves to display a picture by having the image forming section, such as a projector, form an image in accordance with a digital video signal and projecting the image on the video display section, such as a screen. The video display apparatus of the present invention is provided with a light-emitting section that emits invisible light through a surface of the video display section during a period of time in which a picture is being displayed on the video display section.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing configuration, during a period of time in which a picture is being displayed on the video display section, invisible light that cannot be seen by human eyes but can be recorded as a visible image by a recording device such a video camera can be emitted from the video display surface. This causes re-shot image content to contain invisible light as an image (re-shooting prevention signal) that interferes with the original picture, thus making it possible to degrade the display quality of the re-shot image. It should be noted that since the light emitted from the light-emitting section is not visible light, it seems to humans as if only the original picture was displayed on the video display section.

Thus, the video display apparatus of the present invention can degrade the display quality of a re-shot picture without lowering the display quality of a picture that is displayed on the video display section. This makes it possible to reduce the utility value of re-shot image content and, as a result, prevent illegal distribution of the re-shot image content.

The video display apparatus of the present invention is preferably configured such that: the video display section is provided with a plurality of holes; and the light-emitting section is disposed behind the video display section.

The foregoing configuration allows light from the light-emitting section to be emitted from the surface of the video display section through the holes formed in the video display section. This makes it possible to emit invisible light toward an area in front of the video display section (toward a viewer) together with the picture displayed on the video display section.

The video display apparatus of the present invention is preferably configured to further include: an image analysis section that analyzes brightness of a picture to be displayed on the video display section; and a light emission control section that controls a state of emission of the light-emitting section, wherein on the basis of the brightness of the picture as analyzed by the image analysis section, the light emission control section renders the light-emitting section higher in emission intensity when the picture to be displayed is bright than when the picture to be displayed is dark.

The foregoing configuration makes it possible to change the emission intensity of the light-emitting section in accordance with the brightness of a picture to be displayed.

The video display apparatus of the present invention is preferably configured such that the light-emitting section is provided at least in a central part of an image display surface of the video display section.

According to the foregoing configuration, invisible light is emitted from the central part of the image display surface. This causes light from the light-emitting section to be incorporated as a video interfering signal into the central part of an image shot with a video camera or the like. Therefore, the display quality of the shot image can be more greatly degraded.

The video display apparatus of the present invention is preferably configured such that the light-emitting section is provided in a plurality of places behind the video display section.

According to the foregoing configuration, invisible light is emitted from a plurality of places on the image display surface. This causes light from the light-emitting section to be incorporated as a video interfering signal into a plurality of places on an image shot with a video camera or the like. Therefore, the display quality of the shot image can be more greatly degraded.

The video display apparatus of the present invention is preferably configured such that the light-emitting section blinks during the period of time in which the picture is being displayed on the video display section.

According to the foregoing configuration, invisible light is emitted from the image display surface while blinking. This causes light from the light-emitting section to be incorporated, while blinking, into an image shot with a video camera or the like. Such a blinking display of light different from the original picture is seen as conspicuous by human eyes. Therefore, the display quality of the shot image can be more greatly degraded by the foregoing configuration.

The video display apparatus of the present invention is preferably configured such that the light-emitting section has a light-emitting diode that blinks at a frequency of 4 Hz to 16 Hz.

According to the foregoing configuration, the blinking of the light-emitting diode at a frequency of 4 Hz to 16 Hz causes light from the light-emitting diode to be incorporated as an image that blinks at a frequency of 4 Hz to 16 Hz (re-shooting prevention signal) into image content re-shot with a video camera or the like. An image blinking at such a frequency brings discomfort to human eyes, thus enhancing the effect of interfering with the original picture. Therefore, the foregoing configuration makes it possible to further degrade the quality of the re-shot image. Further, the light-emitting diode becomes more durable when it blinks than when it is kept turned on.

The video display apparatus of the present invention may be configured such that the invisible light is infrared light.

The video display apparatus of the present invention is preferably configured such that the light-emitting section has its illuminating surface provided with a visible-light cut filter that blocks visible light.

According to the foregoing configuration, even in a case where light emitted from the light-emitting section contains light of a visible light range, the provision of the visible-light cut filter makes it possible to block light of a visible light range and allow only invisible light to be emitted from the surface of the video display section.

In order to solve the foregoing problems, a video display method according to the present invention is a method for displaying a picture on a video display apparatus including (i) an image forming section that generates a display image in accordance with a digital video signal and (ii) a video display section on which an image generated by the image forming section is projected and displayed, the method including emitting invisible light through a surface of the video display section during a period of time in which a picture is being displayed on the video display section.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing method, during a period of time in which a picture is being displayed on the video display section, invisible light that cannot be seen by human eyes but can be recorded as a visible image by a recording device such a video camera can be emitted from the video display surface. This causes re-shot image content to contain invisible light as an image (re-shooting prevention signal) that interferes with the original picture, thus making it possible to degrade the display quality of the re-shot image. It should be noted that since the light emitted from the light-emitting section is not visible light, it seems to humans as if only the original picture was displayed on the video display section.

Thus, the video display method of the present invention can degrade the display quality of a re-shot picture without lowering the display quality of a picture that is displayed on the video display section. This makes it possible to reduce the utility value of re-shot image content and, as a result, prevent illegal distribution of the re-shot image content.

In order to solve the foregoing problems, a video display screen according to the present invention is a video display screen on which an image formed in accordance with a digital video signal is displayed, the video display screen including: a video display sheet; and a light-emitting section that emits invisible light through a surface of the video display sheet during a period of time in which a picture is being displayed on the video display sheet.

The video display screen of the present invention is a video display screen on which an image formed in accordance with a digital video signal by using an image forming device such as a projector is displayed. The video display screen of the present invention includes a video display sheet and a light-emitting section that emits invisible light through a surface (video display surface) of the video display sheet.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing configuration, during a period of time in which a picture is being displayed on the video display sheet, invisible light that cannot be seen by human eyes but can be recorded as a visible image by a recording device such a video camera can be emitted from the video display surface. This causes re-shot image content to contain invisible light as an image (re-shooting prevention signal) that interferes with the original picture, thus making it possible to degrade the display quality of the re-shot image.

The video display screen of the present invention is preferably configured such that: the video display sheet is provided with a plurality of holes; and the light-emitting section is disposed behind the video display sheet.

The foregoing configuration allows light from the light-emitting section to be emitted from the surface of the video display sheet through the holes formed in the video display sheet. This makes it possible to emit invisible light toward an area in front of the video display sheet (toward a viewer) together with the picture displayed on the video display sheet.

In order to solve the foregoing problems, a liquid crystal display device according to the present invention is a liquid crystal display device including (i) a liquid crystal panel on which a picture is displayed and (ii) a backlight that irradiates the liquid crystal panel with light, the backlight including: a visible light source that irradiates the liquid crystal panel with visible light; and a light-emitting section that emits invisible light, the backlight emitting the invisible light through an image display surface of the liquid crystal panel during a period of time in which a picture is being displayed on the liquid crystal panel.

The liquid crystal display device of the present invention includes a liquid crystal panel on which a picture is displayed and a backlight that irradiates the liquid crystal panel with light. The liquid crystal display device of the present invention is provided with a light-emitting section that emits invisible light through an image display surface of the liquid crystal panel during a period of time in which a picture is being displayed on the liquid crystal panel.

The term "invisible light" here means light that is not included in a range of visible wavelengths of 380 nm to 780 nm and, specifically, means infrared light or ultraviolet light. Such invisible light cannot be seen by human eyes, but can be detected by a content recording device (specifically, for example, a video camera) including a CCD, a CMOS image sensor, etc. in a similar manner to visible light.

According to the foregoing configuration, during a period of time in which a picture is being displayed on the liquid crystal panel, invisible light that cannot be seen by human eyes but can be recorded as a visible image by a recording device such a video camera can be emitted from the image display surface. This causes re-shot image content to contain invisible light as an image (re-shooting prevention signal) that interferes with the original picture, thus making it possible to degrade the display quality of the re-shot image. It should be noted that since the light emitted from the light-emitting section is not visible light, it seems to humans as if only the original picture was displayed on the liquid crystal panel.

Thus, the liquid crystal display device of the present invention can degrade the display quality of a re-shot picture without lowering the display quality of a picture that is displayed on the liquid crystal panel. This makes it possible to reduce the utility value of re-shot image content and, as a result, prevent illegal distribution of the re-shot image content.

The liquid crystal display device of the present invention is preferably configured to further include: an image analysis section that analyzes brightness of a picture to be displayed on the liquid crystal panel; and a light emission control section that controls a state of emission of the light-emitting section, wherein on the basis of the brightness of the picture as analyzed by the image analysis section, the light emission control section renders the light-emitting section higher in emission intensity when the picture to be displayed is bright than when the picture to be displayed is dark.

The foregoing configuration makes it possible to change the emission intensity of the light-emitting section in accordance with the brightness of a picture to be displayed.

The liquid crystal display device of the present invention is preferably configured such that the light-emitting section irradiates at least in a central part of an image display surface of the liquid crystal panel with the invisible light.

According to the foregoing configuration, invisible light is emitted from the central part of the image display surface. This causes light from the light-emitting section to be incorporated as a video interfering signal into the central part of an image shot with a video camera or the like. Therefore, the display quality of the shot image can be more greatly degraded.

The liquid crystal display device of the present invention is preferably configured such that the light-emitting section has a plurality of invisible light sources.

According to the foregoing configuration, invisible light is emitted from a plurality of places on the image display surface. This causes light from the light-emitting section to be incorporated as a video interfering signal into a plurality of places on an image shot with a video camera or the like. Therefore, the display quality of the shot image can be more greatly degraded.

The liquid crystal display device of the present invention is preferably configured such that the light-emitting section blinks during the period of time in which the picture is being displayed on the liquid crystal panel.

According to the foregoing configuration, invisible light is emitted from the image display surface while blinking. This causes light from the light-emitting section to be incorporated, while blinking, into an image shot with a video camera or the like. Such a blinking display of light different from the original picture is seen as conspicuous by human eyes. Therefore, the display quality of the shot image can be more greatly degraded by the foregoing configuration.

The liquid crystal display device of the present invention is preferably configured such that the light-emitting section has a light-emitting diode that blinks at a frequency of 4 Hz to 16 Hz.

According to the foregoing configuration, the blinking of the light-emitting diode at a frequency of 4 Hz to 16 Hz causes light from the light-emitting diode to be incorporated as an image that blinks at a frequency of 4 Hz to 16 Hz (re-shooting prevention signal) into image content re-shot with a video camera or the like. An image blinking at such a frequency brings discomfort to human eyes, thus enhancing the effect of interfering with the original picture. Therefore, the foregoing configuration makes it possible to further degrade the quality of the re-shot image. Further, the light-emitting diode becomes more durable when it blinks than when it is kept turned on.

The liquid crystal display device of the present invention may be configured such that the invisible light is infrared light.

The liquid crystal display device of the present invention is preferably configured such that the light-emitting section has its illuminating surface provided with a visible-light cut filter that blocks visible light.

According to the foregoing configuration, even in a case where light emitted from the light-emitting section contains light of a visible light range, the provision of the visible-light cut filter makes it possible to block light of a visible light range and allow only invisible light to be emitted from the image display surface.

Further, backlights of liquid crystal display devices are classified broadly into side-edge backlights (also referred to as edge-light backlights) and direct backlights. The backlight employed in the liquid crystal display device of the present invention may be a direct backlight or a side-edge backlight.

A direct illumination device has a plurality of light sources arranged behind a liquid crystal display panel to directly illuminate the liquid crystal panel. As such, a direct illumination device makes it easy to obtain high luminance even from a large screen and therefore is used mainly in a 20-inch or larger liquid crystal display.

A side-edge illumination device has a light guide provided behind a liquid crystal display panel with a light source provided on a side edge of the light guide. Light emitted from the light source is reflected by the light guide to indirectly but uniformly illuminate the liquid crystal display panel. With this structure, an illumination device can be achieved which is low in luminance but small in thickness and excellent in luminance uniformity. As such, a side-edge illumination device is used mainly in a small-to-medium-sized display such as one in a cellular phone, a laptop computer, etc. An example of a side-edge illumination device is one described in Patent Literature 1 (Japanese Patent Application Publication, Tokukai, No. 2003-43266 A (Publication Date: February 13, 2003)).

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention can degrade the display quality of an image obtained by re-shooting with a video camera a digital picture displayed on a screen. Therefore, use of a video display apparatus, a video display method, a video display screen, and a liquid crystal display device of the present invention in a movie theater or the like makes it possible to prevent illegal recording and distribution of video content.

### Reference Signs List

1 Video display system (video display apparatus)
110 Content display section (video reproducing machine, projector, screen)
120 Re-shooting prevention signal output section (video reproducing machine, infrared-emitting unit)
121 Content analysis section (image analysis section)
122 Signal control section (light emission control section)
123 Signal output pattern storage section (light emission control section)
124 Signal generation section (infrared-emitting unit, light-emitting section)
130 Content recording device (video camera)
201 Video reproducing machine
202 Projector (image forming section)
203 Screen (video display section, video display screen)
203a Image display surface (image display region)
204 Infrared-emitting unit (light-emitting section)
204a Infrared-emitting region
300 Liquid crystal display device
310 Liquid crystal panel
320 Backlight
322 RGB-LED (visible light source)
323 Infrared LED (light-emitting section, invisible light source)
382 Image analysis section
383 Emission intensity control section (light emission control section)
420 Backlight
423a Infrared-emitting region (light-emitting section)

## Claims

1. A video display apparatus including (i) an image forming section that generates a display image in accordance with a digital video signal and (ii) a video display section on which an image generated by the image forming section is projected and displayed, the video display apparatus comprising a light-emitting section that emits invisible light through a surface of the video display section during a period of time in which a picture is being displayed on the video display section.

2. The video display apparatus as set forth in claim 1, wherein:
the video display section is provided with a plurality of holes; and
the light-emitting section is disposed behind the video display section.

3. The video display apparatus as set forth in claim 1 or 2, further comprising:
an image analysis section that analyzes brightness of a picture to be displayed on the video display section; and
a light emission control section that controls a state of emission of the light-emitting section, wherein
on the basis of the brightness of the picture as analyzed by the image analysis section, the light emission control section renders the light-emitting section higher in emission intensity when the picture to be displayed is bright than when the picture to be displayed is dark.

4. The video display apparatus as set forth in any one of claims 1 to 3, wherein the light-emitting section is provided at least in a central part of an image display surface of the video display section.

5. The video display apparatus as set forth in any one of claims 1 to 4, wherein the light-emitting section is provided in a plurality of places behind the video display section.

6. The video display apparatus as set forth in any one of claims 1 to 5, wherein the light-emitting section blinks during the period of time in which the picture is being displayed on the video display section.

7. The video display apparatus as set forth in claim 6, wherein the light-emitting section has a light-emitting diode that blinks at a frequency of 4 Hz to 16 Hz.

8. The video display apparatus as set forth in any one of claims 1 to 7, wherein the invisible light is infrared light.

9. The video display apparatus as set forth in any one of claims 1 to 8, wherein the light-emitting section has its illuminating surface provided with a visible-light cut filter that blocks visible light.

10. A method for displaying a picture on a video display apparatus including (i) an image forming section that generates a display image in accordance with a digital video signal and (ii) a video display section on which an image generated by the image forming section is projected and displayed, the method comprising emitting invisible light through a surface of the video display section during a period of time in which a picture is being displayed on the video display section.

11. A video display screen on which an image formed in accordance with a digital video signal is displayed, the video display screen comprising:
a video display sheet; and
a light-emitting section that emits invisible light through a surface of the video display sheet during a period of time in which a picture is being displayed on the video display sheet.

12. The video display sheet as set forth in claim 11, wherein:
the video display sheet is provided with a plurality of holes; and
the light-emitting section is disposed behind the video display sheet.

13. A liquid crystal display device including (i) a liquid crystal panel on which a picture is displayed and (ii) a backlight that irradiates the liquid crystal panel with light, the backlight comprising:
a visible light source that irradiates the liquid crystal panel with visible light; and
a light-emitting section that emits invisible light,
the backlight emitting the invisible light through an image display surface of the liquid crystal panel during a period of time in which a picture is being displayed on the liquid crystal panel.

14. The liquid crystal display device as set forth in claim 13, further comprising:
an image analysis section that analyzes brightness of a picture to be displayed on the liquid crystal panel; and
a light emission control section that controls a state of emission of the light-emitting section, wherein
on the basis of the brightness of the picture as analyzed by the image analysis section, the light emission control section renders the light-emitting section higher in emission intensity when the picture to be displayed is bright than when the picture to be displayed is dark.

15. The liquid crystal display device as set forth in claim 13 or 14, wherein the light-emitting section irradiates at least in a central part of an image display surface of the liquid crystal panel with the invisible light.

16. The liquid crystal display device as set forth in any one of claim 13 to 15, wherein the light-emitting section has a plurality of invisible light sources.

17. The liquid crystal display device as set forth in any one of claims 13 to 16, wherein the light-emitting section blinks during the period of time in which the picture is being displayed on the liquid crystal panel.

18. The liquid crystal display device as set forth in 17, wherein the light-emitting section has a light-emitting diode that blinks at a frequency of 4 Hz to 16 Hz.

19. The liquid crystal display device as set forth in any one of claims 13 to 18, wherein the invisible light is infrared light.

20. The liquid crystal display device as set forth in any one of claims 13 to 19, wherein the light-emitting section has its illuminating surface provided with a visible-light cut filter that blocks visible light.

21. The liquid crystal display device as set forth in any one of claims 13 to 20, wherein the backlight is a direct backlight.

22. The liquid crystal display device as set forth in any one of claims 13 to 20, wherein the backlight is a side-edge backlight.
